# EUROPEAN PATENT APPLICATION

(11) **EP 4 478 581 A1**
(43) Date of publication of application: **18.12.2024**
(21) Application number: 23775282.9
(22) Date of filing: 21.03.2023
(51) Int. Cl.: H02J 7/00, B60L 53/80

(54) **BATTERY CHARGING DEVICE**

(30) Priority: 21.03.2022 KR 20220035030; 21.03.2022 KR 20220035031; 21.03.2022 KR 20220035032; 21.03.2022 KR 20220035033
(71) Applicant: LG Energy Solution, Ltd., Seoul 07335 (KR)
(72) Inventor: LEE, Hyun Hwa, Daejeon 34122 (KR); LEE, Jin Woo, Daejeon 34122 (KR); LEE, Kyoung Jin, Daejeon 34122 (KR); PARK, Chan Woo, Daejeon 34122 (KR)
(74) Representative: Plasseraud IP
(86) International application number: PCT/KR2023/003752
(87) International publication number: WO 2023/182786

(57) **Abstract**

A battery charging device according to an embodiment of the present invention includes: a case having an accommodation space into which a battery pack is inserted; a movable plate on which the battery pack is seated and which moves in a longitudinal direction of the case within the accommodation space; a terminal plate comprising a charging terminal selectively connected to the battery pack inserted into the accommodation space; and a guide part disposed in the accommodation space to guide the movable plate so that the movable plate moves in the longitudinal direction of the case.

## Description

### TECHNICAL FIELD

The present invention relates to a battery charging device, and more particularly, to a battery charging device into which a battery pack is inserted.

### BACKGROUND ART

Current commercially available secondary batteries include nickel cadmium batteries, nickel hydride batteries, nickel zinc batteries, lithium secondary batteries, and the like. Among them, lithium secondary batteries hardly have a memory effect compared to nickel-based secondary batteries and thus are in the limelight because of their advantages of free charging and discharging, very low self-discharging rate, and high energy density.

The lithium secondary batteries mainly use lithiumbased oxide and a carbon material as a positive electrode active material and a negative electrode active material, respectively. In addition, such a lithium secondary battery includes an electrode assembly, in which a positive electrode plate and a negative electrode plate, which are coated with a positive electrode active material and a negative electrode active material, respectively, are disposed with a separator therebetween, and an exterior that is sealed in a state of accommodating the electrode assembly together with an electrolyte.

The lithium secondary batteries may be classified into can-type secondary batteries, in which an electrode assembly is embedded in a metal can, and pouch-type secondary batteries, in which the electrode assembly is embedded in a pouch provided as an aluminum laminate sheet, depending on shapes of the battery case. Also, the can-type secondary battery may be further classified into a cylindrical battery and a prismatic battery according to the shapes of the metal can.

Recently, as demands for portable electronic products such as laptops, video cameras, and mobile phones have rapidly increased, and development of electric vehicles, energy storage batteries, robots, satellites, etc. is regularized, studies on high-performance secondary batteries that are repeatedly chargeable and dischargeable are being actively conducted.

Particularly, vehicles with internal combustion engines are gradually decreasing, and accordingly, demand for hybrid vehicles and electric vehicles is increasing. In line with this trend, demand for two-wheeled vehicles used for short-distance movement, electric motorcycles and electric scooters using only electric motors as driving force is increasing, and their markets are gradually expanding.

According to the related art, in order to charge the battery of the electric two-wheeled vehicle, a user moves to a separate charging facility for charging to perform the charging or performs the charging by connecting a plug-in type charging device to the electric two-wheeled vehicle. However, in this case, the user has to wait until the battery is fully charged, and the vehicle does not operate.

In order to solve this problem, a battery swapping station (BSS), in which the used battery is returned, and a fully charged battery is provided, has been proposed.

In the case of such a battery swapping station, it is necessary to provide an optimized battery exchange experience to the user and efficiently manage the battery swapping station.

### DISCLOSURE OF THE INVENTION

### TECHNICAL PROBLEM

An object of the prevent invention for solving the problem is to provide a battery charging device that is convenient for use and capable of being stably managed.

However, the technical problem to be solved by the present invention is not limited to the above problem, and other problems not mentioned will be clearly understood by those skilled in the art from the description of the invention described below.

### TECHNICAL SOLUTION

A battery charging device according to an embodiment of the present invention includes: a case having an accommodation space into which a battery pack is inserted; a terminal plate including a charging terminal selectively connected to the battery pack inserted into the accommodation space; and an opening/closing plate disposed at an entrance of the accommodation space and the terminal plate so as to be opened and closed according to a movement of the battery pack.

The battery charging device may further include a movable plate on which the battery pack is seated and which moves in a longitudinal direction of the case within the accommodation space.

The battery charging device may further include a plate fixing part configured to fix the movable plate when the battery pack and the charging terminal are connected to each other.

The movable plate may be provided with a damper configured to buffer an impact applied when the battery pack is inserted.

The battery charging device may further include a guide part disposed in the accommodation space to guide the movable plate so that the movable plate moves in the longitudinal direction of the case.

The guide part may include: a guide rail disposed on an inner surface of the case and extending in a direction parallel to the longitudinal direction of the case; and a guide block which is slidably coupled to the guide rail and to which the movable plate is connected.

The guide rail may be provided with a damper configured to buffer an impact applied by the guide block when the battery pack is inserted or extracted.

The guide part may further include an electromagnet configured to selectively apply an attractive force to the guide block toward the terminal plate.

The guide part may further include an elastic member configured to apply an elastic force toward the entrance of the accommodation space on the guide block.

The elastic member may include a spring configured pull the guide block toward the entrance of the accommodation space.

The battery charging device may further include a pack fixing part provided on the terminal plate and configured to fix the battery pack when the battery pack and the charging terminal are connected to each other.

The battery pack may be connected to the charging terminal in a state in which the opening/closing plate is opened.

The opening/closing plate may be configured to be closed when the battery pack is extracted from the accommodation space.

The battery charging device may further include a driving part configured to selectively open and close the opening/closing plate as the battery pack moves.

The battery charging device may further include a proximity sensor configured to sense whether the battery pack reaches a preset position.

The driving part may be configured to open and close the opening/closing plate based on a sensed result of the proximity sensor.

The opening/closing plate may include a first plate and a second plate, which are arranged in a width direction of the case to rotate in directions opposite to each other.

The first plate may be rotatably hinge-coupled to an inner surface of one side of the case, and the second plate may be rotatably hinge-coupled to an inner surface of another side of the case.

When the opening/closing plate is opened, the battery pack may be introduced between the first plate and the second plate.

In a state in which the battery pack is connected to the charging terminal, the battery pack may be disposed between the first plate and the second plate.

In a state in which the battery pack is connected to the charging terminal, the first plate and the second plate may be configured to support opposite side surfaces of the battery pack.

A battery charging device includes: a case having an accommodation space into which a battery pack is inserted; a movable plate on which the battery pack is seated and which moves in a longitudinal direction of the case within the accommodation space; a terminal plate including a charging terminal selectively connected to the battery pack inserted into the accommodation space; and a guide part disposed in the accommodation space to guide the movable plate so that the movable plate moves in the longitudinal direction of the case.

A damper provided on the movable plate and configured to buffer an impact applied by the battery pack when the battery pack is inserted.

The guide part may include: a guide rail disposed on an inner surface of the case and extending in a direction parallel to the longitudinal direction of the case; and a guide block which is slidably coupled to the guide rail and to which the movable plate is connected.

The guide rail may be provided with a damper configured to buffer an impact applied by the guide block when the battery pack is inserted or separated.

The guide part may further include an electromagnet configured to selectively apply an attractive force to the guide block toward the terminal plate.

The guide part may further include an elastic member configured to apply elastic force toward the entrance of the accommodation space on the guide block.

The elastic member may include a spring configured pull the guide block toward the entrance of the accommodation space.

The battery charging device may further include a plate fixing part configured to fix the movable plate when the battery pack and the charging terminal are connected to each other.

The plate fixing part may include: a latch configured to be connected to the movable plate; and a latch driving part configured to drive the latch so that the latch fixes the movable plate or releases a fixed state of the movable plate.

The battery charging device may further include a pack fixing part provided on the terminal plate and configured to fix the battery pack when the battery pack and the charging terminal are connected to each other.

The pack fixing part may include: a hook configured to be connected to the battery pack; and a hook driving part configured to drive the hook so that the hook fixes the battery pack or releases a fixed state of the battery pack.

An opening through which the hook protrudes may be defined in the terminal plate, and the hook may pass through the opening so as to be selectively connected to the battery pack.

The hook may be provided in a pair at opposite sides of the charging terminal.

The battery charging device may further include a door unit configured to selectively open and close an entrance of the accommodation space.

The door unit may include: a door frame provided on an end of one side of the case and configured to define an entrance of the accommodation space; and a door plate rotatably hinge-coupled to the door frame and configured to selectively open and close the entrance of the accommodation space.

The guide part may include: a guide rail disposed on an inner surface of the case and extending in a direction parallel to the longitudinal direction of the case; a guide block which is slidably coupled to the guide rail and to which the movable plate is connected; and an elastic member configured to apply an elastic force to the entrance of the accommodation space on the guide block.

A first spring holder to which one end of the elastic member is connected may be provided on the case or the door frame, and a second spring holder to which another end of the elastic member is connected may be provided on the guide block.

A door lock configured to selectively lock the door plate to the door frame may be provided on the door unit.

The door lock may include: a locking groove defined in the door frame; and a locking device provided on the door plate to selectively insert a locking part to the locking groove.

The door unit may be provided with a communication part configured to wirelessly communicate with an external device or the battery pack, and the door lock may be selectively locked or unlocked according to a signal input through the communication part.

The door plate may be connected to the door frame through an elastic hinge, and the elastic hinge may be configured to apply an elastic force to the door plate so that the door plate closes the entrance of the accommodation space.

When the battery pack is inserted into the accommodation space, the door plate that is opened may be disposed between the battery pack and an inner surface of the case.

A battery charging device according to an embodiment of the present invention includes: a case having an accommodation space into which a battery pack is inserted; a terminal plate provided with a charging terminal selectively connected to the battery pack inserted into the accommodation space and moving in a longitudinal direction of the case; a fixed plate facing the terminal plate and disposed at a position opposite to an entrance of the accommodation space with respect to the terminal plate; and a buffer part disposed between the terminal plate and the fixed plate to support the terminal plate to be buffered.

A damper is configured to buffer an impact applied by the battery pack when the battery pack is inserted, and the damper may be provided on one surface of opposite surfaces of the terminal plate, which faces the battery pack.

The buffer part may include: a shock absorber provided on the fixed plate; and a support which is provided on the terminal plate and is in contact with or supported by the shock absorber when the terminal plate approaches the fixed plate.

The support may be configured to support the terminal plate with respect to the case.

The support may be provided at each of four corner parts of the terminal plate.

The buffer part may be configured to apply an elastic force toward the entrance of the accommodation space on the terminal plate.

The battery charging device may further include a pack fixing part provided on the terminal plate and configured to fix the battery pack when the battery pack and the charging terminal are connected to each other.

The battery charging device may further include a terminal plate restriction part configured to selectively restrict the terminal plate in the longitudinal direction of the case.

A battery charging device according to an embodiment of the present invention includes: a case having an accommodation space into which a battery pack is inserted; a terminal plate provided with a charging terminal selectively connected to the battery pack inserted into the accommodation space; a fixed plate facing the terminal plate and disposed at a position opposite to an entrance of the accommodation space with respect to the terminal plate; and a buffer part protruding from the fixed plate to an inside of the terminal plate to support the battery pack to be buffered.

The buffer part may include: a shock absorber provided on the fixed plate; and a support extending to protrude from the shock absorber to the inside of the terminal plate.

A damper configured to buffer an impact applied by the battery pack when the battery pack is inserted may be provided on an end of the support.

A through-hole through which the support passes may be defined in the terminal plate.

The support may pass through four corner parts of the terminal plate to protrude inward.

The buffer part may be configured to apply a restoring force toward the entrance of the accommodation space on the battery pack.

The battery charging device may further include a pack fixing part provided on the terminal plate and configured to fix the battery pack when the battery pack and the charging terminal are connected to each other.

### ADVANTAGEOUS EFFECTS

According to a preferred embodiment of the present invention, since the battery pack is smoothly inserted into and extracted from the accommodation space of the case, the user convenience may be improved.

In addition, when the connection between the battery pack and the charging terminal is released, the battery pack may be easily extracted to the outside of the case.

In addition, since the battery pack being charged is firmly fixed, it may be possible to prevent the battery pack from being arbitrarily extracted or separated.

In addition, the impact applied to the internal components when the battery pack is inserted is buffered, and thus the safety of the battery charging device may be improved.

In addition, since the door of the battery charging device that is not in use is locked, the inflow of foreign substances into the case or the electric accident of the user may be prevented.

In addition, several other additional effects may be achieved by various embodiments of the present invention. The various effects of the present invention will be described in detail in each embodiment, or descriptions of effects that can be easily understood by those skilled in the art will be omitted.

### BRIEF DESCRIPTION OF THE DRAWINGS

The following drawings attached in this specification illustrate a preferred embodiment of the present invention and function to make further understood the technical spirit of the present invention along with the detailed description of the invention, and thus, the present invention should not be construed as being limited to only the drawings.
FIG. 1 is a schematic view of a battery swapping station.
FIG. 2 is a perspective view illustrating a state before a battery pack is inserted into a battery charging device according to a first embodiment of the present invention.
FIG. 3 is a perspective view illustrating a state in which the battery pack is inserted into the battery charging device of FIG. 2.
FIG. 4 is a view illustrating the inside of the battery charging device according to the first embodiment of the present invention.
FIG. 5 is a cross-sectional view taken along line A-A' of FIG. 2.
FIG. 6 is a sectional view taken along the line B-B' of FIG. 3.
FIG. 7 is a sectional view taken along the line C-C' of FIG. 2.
FIG. 8 is a perspective view of a door unit of FIG. 2 when viewed in a different direction.
FIG. 9 is a schematic view of a battery charging device according to a second embodiment of the present invention.
FIGS. 10 and 11 are schematic views of a battery charging device according to a third embodiment of the present invention.
FIG. 12 is a schematic view of a battery charging device according to a fourth embodiment of the present invention.
FIG. 13 is a schematic view of a battery charging device according to a fifth embodiment of the present invention.

### MODE FOR CARRYING OUT THE INVENTION

Hereinafter, preferred embodiments of the present invention will be described in detail with reference to the accompanying drawings so that those of ordinary skill in the art can easily carry out the present invention. However, the present invention may be implemented in several different forms and is not limited or restricted by the following examples.

In order to clearly explain the present invention, detailed descriptions of portions that are irrelevant to the description or related known technologies that may unnecessarily obscure the gist of the present invention have been omitted, and in the present specification, reference symbols are added to components in each drawing. In this case, the same or similar reference numerals are assigned to the same or similar elements throughout the specification.

Also, terms or words used in this specification and claims should not be restrictively interpreted as ordinary meanings or dictionary-based meanings, but should be interpreted as meanings and concepts conforming to the scope of the present invention on the basis of the principle that an inventor can properly define the concept of a term to describe and explain his or her invention in the best ways.

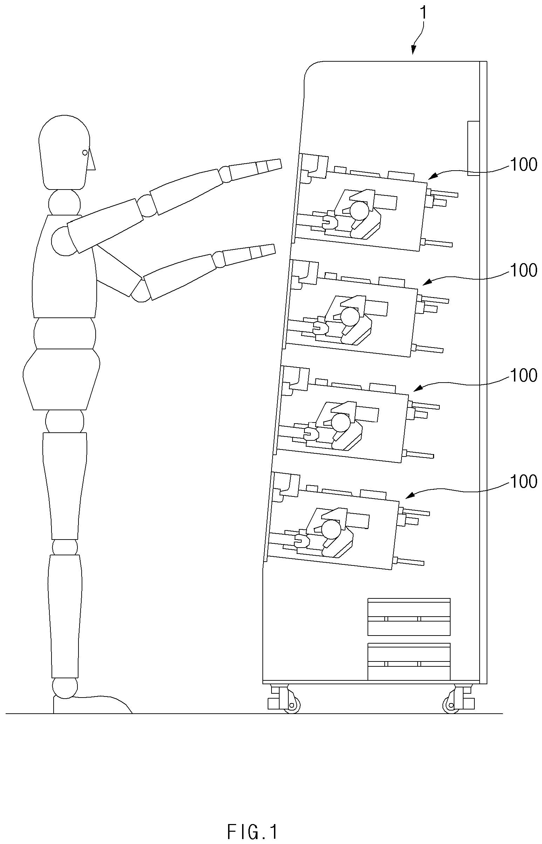

FIG. 1 is a schematic view of a battery swapping station.

A battery swapping station may include at least one, preferably a plurality of battery charging devices 100. For example, the plurality of battery charging devices 100 may be accommodated in a single cabinet, and a user may access the plurality of battery charging devices 100 from the front of the cabinet.

A battery pack may be inserted into each of the battery charging devices 100, and the battery charging device 100 may charge the inserted battery pack. The user may receive the battery pack that has been charged in each battery charging device 100 and return an existing battery pack to the battery charging device 100.

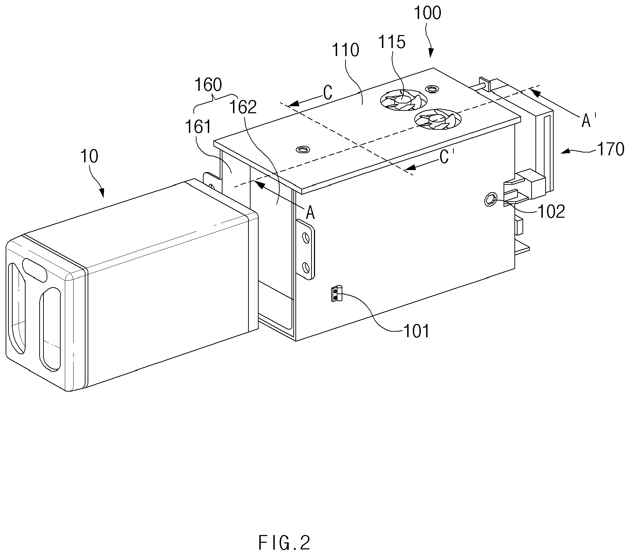

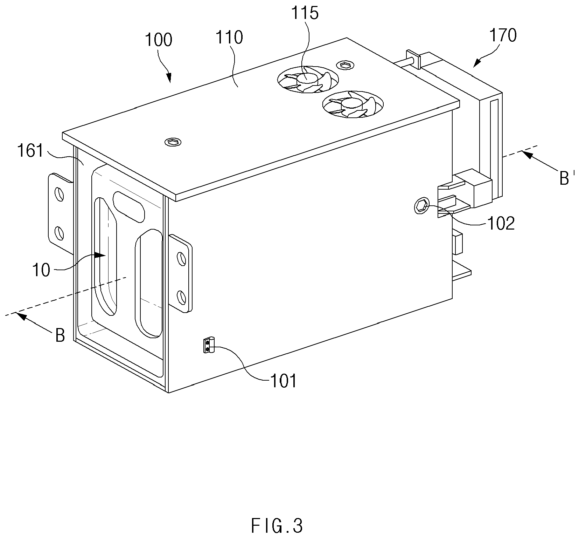

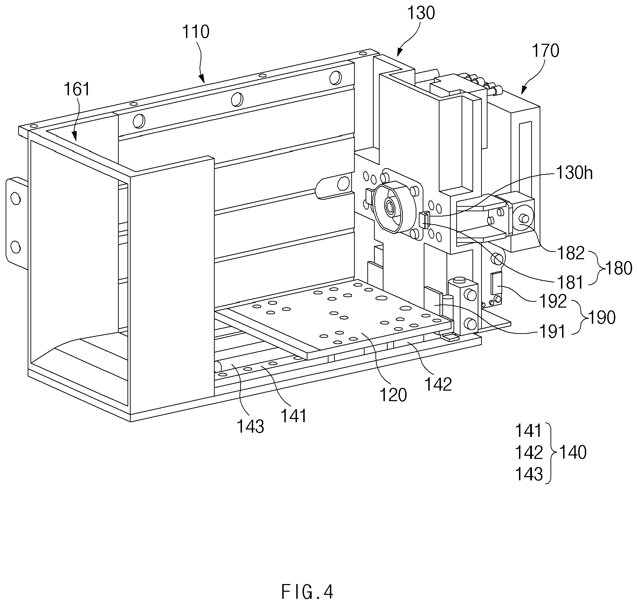

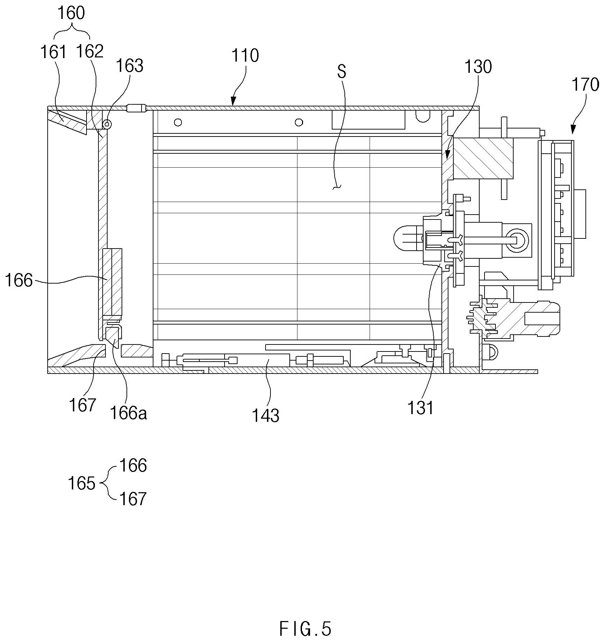

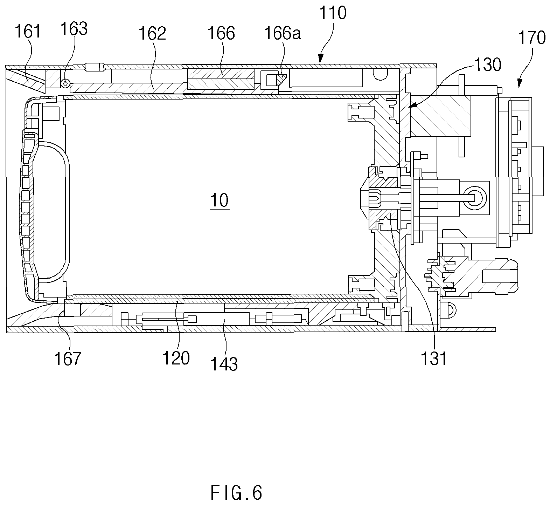

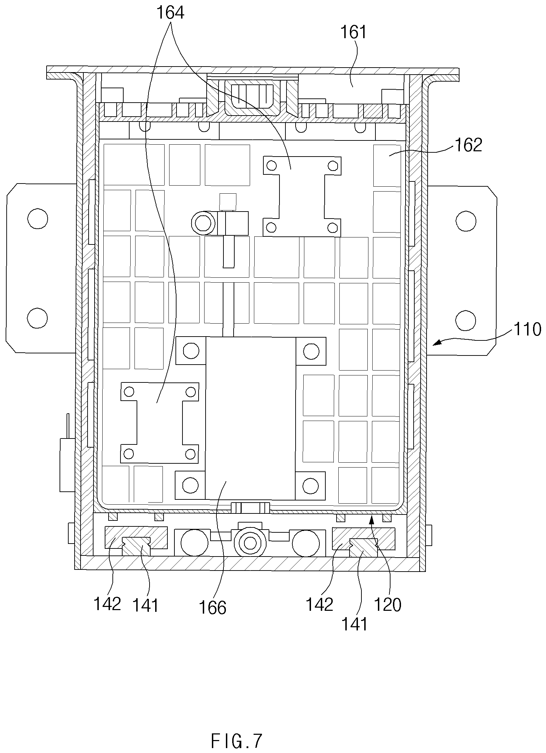

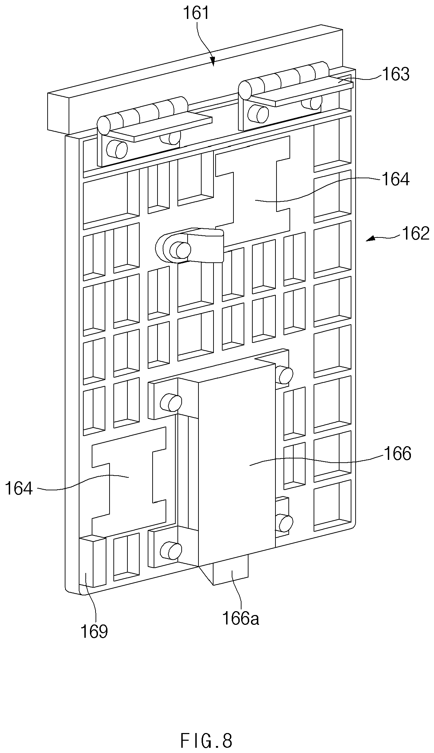

FIG. 2 is a perspective view illustrating a state before a battery pack is inserted into a battery charging device according to a first embodiment of the present invention, FIG. 3 is a perspective view illustrating a state in which the battery pack is inserted into the battery charging device of FIG. 2, FIG. 4 is a view illustrating the inside of the battery charging device according to the first embodiment of the present invention, FIG. 5 is a cross-sectional view taken along line A-A' of FIG. 2, FIG. 6 is a sectional view taken along the line B-B' of FIG. 3, FIG. 7 is a sectional view taken along the line C-C' of FIG. 2, and FIG. 8 is a perspective view of a door unit of FIG. 2 when viewed in a different direction.

A battery charging device 100 according to a first embodiment of the present invention may include a case 110 having an accommodation space S into which a battery pack 10 is inserted, and a movable plate 120 on which the battery pack 10 is seated, a terminal plate 130 provided with a charging terminal 131, and a guide part 140 for guiding the movable plate 120. The battery charging device 100 may further include a door unit 160 that opens and closes an entrance of the accommodation space S.

The case 110 may have the accommodation space S into which the battery pack 10 is inserted. That is, the case 110 may be a slot into which the battery pack 10 is inserted.

The case 110 may be provided to be elongated in one direction (e.g., in a front and back direction). The entrance of the accommodation space S may be defined in one end of the case 110, and the battery pack 10 may be inserted into or extracted from the accommodation space S through the entrance. The case 110 may have a substantially box shape. One end of the case 110 may be opened to define the entrance of the accommodation space S.

For example, the case 110 may include an inner case having the accommodation space S and an outer case accommodating the inner case. In this case, electric components such as a control board, a detection sensor, or a driving device may be provided between the inner case and the outer case. However, it is not limited thereto, and it is also possible that the case 110 is made of a single case having the accommodation space S.

A heat dissipation fan 115 may be provided in the case 110. The heat dissipation fan 115 may be configured to dissipate heat from the accommodation space S to the outside of the case 110. Thus, heat generated by charging the battery pack 10 may be smoothly dissipated.

The battery pack 10 may be seated on the movable plate 120. The movable plate 120 may be disposed inside the case 110. The movable plate 120 may be disposed horizontally. The movable plate 120 may move in a longitudinal direction of the case 110 within the accommodation space S of the case 110. The movable plate 120 may be slid in the longitudinal direction of the case 110 within the accommodation space S.

The terminal plate 130 may be disposed substantially vertically. The terminal plate 130 may be disposed to face the entrance of the accommodation space S. A shape of the terminal plate 130 is not limited.

The terminal plate 130 may be fixed to the case 110. For example, the entrance of the accommodation space S may be defined in one end of the case 110, and a terminal plate 130 may be disposed on the other end. The accommodation space S may be defined by an inner surface of the case 110 and an inner surface of the terminal plate 130.

A charging terminal 131 selectively connected to the battery pack 10 inserted into the accommodation space S may be provided on the terminal plate 130. The charging terminal 131 may be exposed to the inside of the accommodation space S. A connector configured to be connected to the charging terminal 131 may be provided on one surface (e.g., a rear surface) of the battery pack 10. The battery pack 10 and the movable plate 120 may move to a position at which the connector of the battery pack 10 is connected to the charging terminal 131.

The guide part 140 may be disposed within the accommodation space S. The guide part 140 may guide the movement of the movable plate 120. In more detail, the guide part 140 may guide the movable plate 120 to move in the longitudinal direction of the case 110.

In more detail, the guide part 140 may include a guide rail 141 and a guide block 142.

The guide rail 141 may be disposed on the inner surface of the case 110. In more detail, the guide rail 141 may be disposed on an inner bottom surface of the case 110. The guide rail 141 may extend parallel to the longitudinal direction of the case 110.

The guide block 142 may be slidably coupled to the guide rail 141. In addition, the movable plate 120 may be connected to the guide block 142. For example, the guide block 142 may be coupled to a bottom surface of the movable plate 120. Thus, the guide block 142 and the movable plate 120 may move along the guide rail 141.

For example, the guide part 140 may be a known LM guide.

A plurality of guide rails 141 may be provided parallel to each other. The plurality of guide rails 141 may be spaced apart from each other in a width direction of the case 110. At least one, preferably a plurality of guide blocks 142 may be coupled to each guide rail 141.

The battery pack 10 inserted into the accommodation space S may enter an upper side of the movable plate 120 and may be seated on the movable plate 120. The battery pack 10, the movable plate 120, and the guide block 142 may move toward the inside of the accommodation space S along the guide rail 141 by force pushing the battery pack 10 by the user.

However, it is not limited thereto, and it is also possible that the battery charging device 100 includes a driving part (e.g., an actuator) for moving the movable plate 120 or the guide block 142. The driving part may move the movable plate 120 or the guide block 142 toward the terminal plate 130 when the battery pack 10 is inserted into the accommodation space S. In this case, there is an advantage that the driving part appropriately adjusts a moving speed of the movable plate 120 or the guide block 142.

The guide part 140 may further include an elastic member 143 for applying elastic force to the guide block 142 toward the entrance of the accommodation space S. The elastic member 143 may be configured to pull the guide block 142 toward the entrance of the accommodation space S.

When the battery pack 10 is separated from the charging terminal 131, the guide block 142, the movable plate 120, and the battery pack 10 may easily move to the entrance of the accommodation space S by the elastic force of the elastic member 143. Thus, the battery pack 10 may be easily extracted to the outside of the case 110.

For example, the elastic member 143 may be a spring configured to pull the guide block 142 toward the entrance of the accommodation space S. The spring may extend parallel to the guide rail 141.

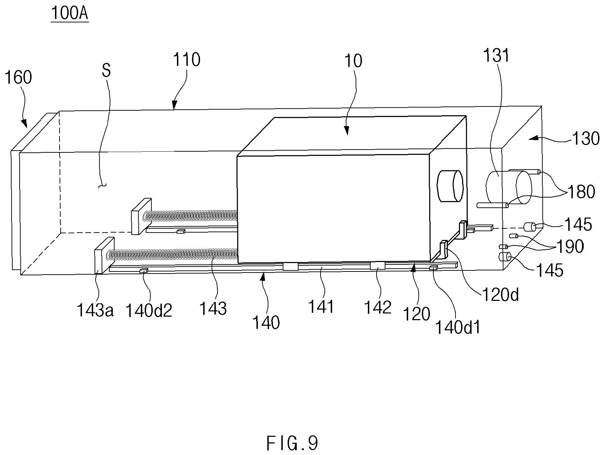

One end of the elastic member 143 may be connected to the case 110 or a door frame 161 to be described later, and the other end of the elastic member 143 may be connected to the guide block 142. In more detail, the case 110 or the door frame 161 may be provided with a first spring holder 143a (see FIG. 9) to which one end of the elastic member 143 is connected, and the guide block may be provided with a second spring holder (not shown) to which the other end of the elastic member 143 is connected to the guide block 142.

The door unit 160 may be disposed on one end of the case 110. The door unit 160 may selectively open and close the entrance of the accommodation space S.

In more detail, the door unit 160 may include a door frame 161 and a door plate 162.

The door frame 161 may be provided on one end of the case 110 and may define the entrance of the accommodation space S. The door frame 161 may have a substantially rectangular frame. The door plate 162 may be rotatably hinge-coupled to the door frame 161. The door plate 162 may selectively open and close the entrance of the accommodation space S.

A handle (not shown) may be provided on an outer surface of the door plate 162. The user may manually open and close the door plate 162 by gripping the handle.

The door plate 162 may rotate toward the inside of the case 10 to open the entrance of the accommodation space S.

When the battery pack 10 is inserted into the accommodation space S, the opened door plate 162 may be disposed between the battery pack 10 and the inner surface of the case 10. In more detail, the opened door plate 162 may be disposed between the battery pack 10 and an inner ceiling surface of the case 10. That is, while the battery pack 10 is inserted into the accommodation space S, the entrance of the accommodation space S may remain in the opened state.

Thus, it is convenient in that the user directly inserts the battery pack 10 without manually opening the door plate 162.

However, it is not limited thereto, and the door plate 162 may rotate to the outside of the case 110 to open the entrance of the accommodation space S. In this case, the door plate 162 may close the entrance of the accommodation space S in the state in which the battery pack 10 is inserted into the accommodation space S.

The door plate 162 may be connected to the door frame 161 through an elastic hinge 163. The elastic hinge 163 may apply elastic force to the door plate 162 so that the door plate 162 closes the entrance of the accommodation space S. For example, the elastic hinge 163 may be provided with a torsion spring.

Thus, when the battery pack 10 is extracted to the outside of the case 110, the door plate 162 may automatically close the entrance of the accommodation space S by the elastic force of the elastic hinge 163. In addition, the door plate 162 may be maintained in a state in which the entrance of the accommodation space S is closed by the elastic force of the elastic hinge 163.

It may be possible that the door unit 160 does not include the door frame 161. In this case, an inner circumference of one end of the case 110 may define the entrance of the accommodation space S, and the door plate 162 may be rotatably connected to the case 110 through the elastic hinge 163.

The door unit 160 may be provided with a door lock 165 that selectively locks the door unit 160. The door lock 165 may selectively lock the door plate 162 with respect to the door frame 161.

In more detail, the door lock 165 may include a locking groove 167 defined in the door frame 161 and a locking device 166 provided on the door plate 162 to selectively insert the locking part 166a into the locking groove 167.

When the locking part 166a is inserted into the locking groove 167, the rotation of the door plate 162 may be restricted. Thus, the door plate 162 may be locked in a state of closing the entrance of the accommodation space S.

The locking groove 167 may be defined in an inner circumference of the door frame 161. For example, the locking groove 167 may be defined in a lower inner surface of the door frame 161.

The locking device 166 may include the locking part 166a and the driving part for moving the locking part 166a. The locking part 166a may be a bar or protrusion extending in one direction. The driving part may insert the locking part 166a into the locking groove 167 or separate the locking part 166a from the locking groove 167.

In a state in which the door plate 162 closes the entrance of the accommodation space S, the locking part 166a of the locking device 166 may face the locking groove 167. In this state, the locking device may lock the door plate 162 by inserting the locking part 166a into the locking groove 167. Conversely, the locking device 166 may separate the locking part 166a from the locking groove 167 to unlock the door plate 162.

When the battery charging device 100 is not in use, that is, when the accommodation space S of the case 110 is empty, the door lock 165 may be maintained in the locked state.

However, it is not limited thereto, and when the door plate 162 is configured to be rotatable to the outside of the case 110, the door plate 162 may close the entrance of the accommodation space S while the battery pack 10 is being charged, and the door lock 165 may be maintained in the locked state.

The door unit 160 may include a communication part 164 (see FIGS. 7 and 8) that wirelessly communicates with an external device or the battery pack 10. The door lock 165 may be selectively locked or unlocked according to a signal input through the communication part 164.

The configuration of the communication part 164 is not limited. For example, the communication part 164 may include an NFC antenna. In this case, the battery pack 10 may include an NFC tag. When the user approaches the battery pack 10 to the door unit 160, the NFC tag of the battery pack 10 and the communication part 164 of the door unit 160 may be wirelessly connected to each other, and the door lock 165 may be unlocked. Thus, the user may open the door unit 160 and insert the battery pack 10 into the accommodation space S.

However, it is not limited thereto, and the communication part 164 may wirelessly communicate with an external device such as a terminal (e.g., a smartphone or tablet) to receive a locking signal or unlocking signal, and thus the door lock 165 may be locked or unlocked.

The battery charging device 100 may further include a pack fixing part 180 that selectively fixes the battery pack 10.

The pack fixing part 180 may be provided on the terminal plate 130. The pack fixing part 180 may fix the battery pack 10 when the battery pack 10 and the charging terminal 131 are connected to each other. Conversely, when a signal for discharging the battery pack 10 is transmitted, the pack fixing part 180 may release the battery pack 10 from being fixed.

The pack fixing part 180 may fix the battery pack 10 in at least one direction of a width direction, longitudinal direction, or height direction of the case 110.

In more detail, the pack fixing part 180 may include a hook 181 configured to be connected to the battery pack 10 and a hook driving part 182 that drives the hook 181.

A groove (not shown) in which the hook 181 is inserted or hung may be defined in the battery pack 10. An through-hole 130h through which the hook 181 protrudes may be defined in the terminal plate 130. The hook 181 may be selectively connected to the battery pack 10 through the through-hole 130h.

The hook 181 may protrude from the terminal plate 130 into the accommodation space S through the opening and may be inserted into or fixed to the groove of the battery pack 10. As a result, the battery pack 10 may be firmly fixed. The shape of the hook 181 is not limited.

A pair of hooks 181 disposed on both sides of the charging terminal 131 may be provided. As a result, the battery pack 10 may be more firmly fixed, and the connection between the battery pack 10 and the charging terminal 131 may be maintained reliably.

The hook driving part 182 may drive the hook 181 so that the hook 181 fixes or releases the battery pack 10. For example, the hook driving part 182 may include a solenoid.

In more detail, when the battery pack 10 is connected to the charging terminal 131, the hook driving part 182 may allow the hook 181 to be advanced into the accommodation space S so that the hook 181 is connected to the battery pack 10. Conversely, when the signal for discharging the battery pack 10 is transmitted, the hook driving part 182 may retreat the hook 181 toward the terminal plate 130 so that the hook 181 is separated from the battery pack 10.

However, the present invention is not limited thereto, and it may be possible to fix the battery pack 10 by changing the configuration or operation of the pack fixing part 180.

The battery charging device 100 may further include a plate fixing part 190 that selectively fixes the movable plate 120.

The plate fixing part 190 may be provided on the terminal plate 130. The plate fixing part 190 may fix the movable plate 120 when the battery pack 10 and the charging terminal 131 are connected to each other. Conversely, when the signal for discharging the battery pack 10 is transmitted, the plate fixing part 190 may release the fixing of the movable plate 120.

The plate fixing part 190 may fix the movable plate 120 in at least one direction of the width direction, longitudinal direction, or height direction of the case 110.

In more detail, the plate fixing part 190 may include a latch 191 configured to be connected to the movable plate 120 and a latch driving part 192 driving the latch 191.

The configuration of the latch 191 is not limited. A pair of latches 191 spaced apart from each other in the width direction of the movable plate 120 may be provided. As a result, the movable plate 120 may be more firmly fixed.

The latch driving part 192 may drive the latch 191 so that the latch 191 fixes or releases the battery pack 10. For example, the latch driving part 192 may include a motor.

In more detail, when the battery pack 10 is connected to the charging terminal 131, the latch driving part 192 may rotate or advance the latch 191 in one direction so that the latch 191 is connected to the movable plate 120. Conversely, the latch driving part 192 may rotate or retreat the latch 191 in the other direction so that the latch 191 is separated from the movable plate 120.

However, it is not limited thereto, and it may be possible to fix the movable plate 120 by changing the structure or operation of the plate fixing part 190.

The battery pack 10 being charged may be prevented from being extracted from the accommodation space S by the pack fixing part 180 and/or the plate fixing part 190. Thus, the battery pack 10 may be stably charged. In addition, it is possible to prevent the battery pack 10 from being separated from the charging terminal 131 due to the elastic member 143 of the guide part 140.

The battery charging device 100 may further include a door sensor 101 that detects whether the door unit 160 is opened or closed. The door sensor 101 may be provided on one surface of the case 110.

For example, the door sensor 101 may be a reed sensor and may be configured to detect a magnet 169 (see FIG. 8) provided on the door unit 160. In more detail, when the door unit 160 closes the entrance of the accommodation space S, the magnet 169 and the door sensor 101 may be adjacent to each other, and when the door unit 160 opens the entrance of the accommodation space S, the magnet 169 and the reed sensor 101 may be far apart from each other.

The battery charging device 100 may further include a proximity sensor 102 that detects whether the battery pack 10 has reached a predetermined position. The proximity sensor 102 may be provided on one surface of the case 110. The type of proximity sensor 102 is not limited.

For example, when the battery pack 10 reaches a position at which the battery pack 10 is connected to the charging terminal 131, the proximity sensor 102 may detect the battery pack 10.

The battery charging device 100 may further include a controller 170. The controller 170 may control an overall operation of the battery charging device 100.

The controller 170 may include at least one processor. For example, the controller 170 may include a control board provided with a plurality of processors and a case accommodating the control board.

The controller 170 may be disposed outside the case 110. For example, the controller 170 may be disposed behind the case 110.

However, it is not limited thereto, and as described above, when the case 110 includes an inner case and an outer case, the controller 170 may be disposed between the inner case and the outer case. Alternatively, the controller 170 may be provided in the battery swapping station 1 to control the plurality of battery charging devices 100.

The controller 170 may detect whether the battery pack 10 is connected to the charging terminal 130. The controller 170 may control the charging of the battery pack 10 through the charging terminal 130.

The controller 170 may control at least one of the pack fixing part 180, the plate fixing part 190, or the door lock 165. In more detail, the controller 170 may control the hook driving part 182 so that the hook 181 of the pack fixing part 180 fixes or releases the battery pack 10. The controller 170 may control the latch driving part 192 so that the latch 191 of the plate fixing part 190 fixes or releases the movable plate 120. The controller 170 may lock or unlock the door lock 165.

The controller 170 may communicate with at least one of the door sensor 101 or the proximity sensor 102 and may receive a detected result of each sensor 101 and 102. For example, the controller 170 may control the door lock 165 in the state in which the door unit 160 is closed, based on the detected result of the door sensor 101. As another example, the controller 170 may control the pack fixing part 180 and/or the plate fixing part 190 in a state in which the battery pack 10 has reached a preset position, based on the detected result of the proximity sensor 102.

The controller 170 may communicate with the communication part 164 (see FIG. 8) provided in the door unit 160 and receive a signal input through the communication part 164. For example, when an NFC tag provided in the battery pack 10 is wirelessly connected to an NFC antenna provided in the communication part 164, the controller may unlock the door lock 165.

As another example, the controller 170 may receive a signal for discharging the battery pack 10 from an external device through the communication part 164. In this case, the controller 170 may control the pack fixing part 180 to release the fixing of the battery pack 10 and may control the plate fixing part 190 to release the fixing of the movable plate 120.

Regardless of the communication part 164 provided in the door unit 160, it is also possible that the controller 170 itself includes the communication part.

FIG. 9 is a schematic view of a battery charging device according to a second embodiment of the present invention.

Hereinafter, contents duplicated with the foregoing first embodiment will be cited, and differences will be mainly described.

A battery charging device 100A according to a second embodiment of the present invention may include at least one damper 120d, 140d1, and 140d2.

The damper 120d configured to buffer an impact applied by the battery pack 10 when the battery pack 10 is inserted may be provided on the movable plate 120.

In more detail, the damper 120d may be disposed at an inner end of the movable plate 120. When the battery pack 10 is inserted into an entrance of the accommodation space S to enter an upper side of the movable plate 120, an inner surface of the battery pack 10 may be hooked by the damper 120d. For example, the battery pack 10 may move alone until it is hooked by the damper 120d, and after the battery pack 10 is hooked by the damper 120d, the battery pack 10 and the movable plate 120 may move together.

Even if the user strongly pushes the battery pack 10 by the damper 120d, the impact applied by the battery pack 10 to the movable plate 120 may be buffered. Thus, it is possible to reduce a risk of failure of the battery charging device 100.

The guide rail 141 may be provided with the dampers 140d1 and 140d2 configured to buffer the impact applied by the guide block 142 when the battery pack 10 is inserted or extracted.

In more detail, at least one of an inner damper 140d1 and an outer damper 140d2 may be provided on the guide rail 141. The inner damper 140d1 may be configured to buffer the impact applied by the guide block 142 when the battery pack 10 is inserted. The outer damper 140d2 may be configured to buffer the impact applied by the guide block 142 when the battery pack 10 is extracted.

The inner damper 140d1 may be disposed more adjacent to an inner end of both ends of the guide rail 141, and the outer damper 140d2 may be disposed more adjacent to an outer end of both the ends of the guide rail 141.

When the plurality of guide blocks 142 are coupled to each guide rail 141, the guide block 142 that is in contact with the inner damper 140d1 and the guide block 142 that is in contact with the outer damper 140d2 may be different from each other.

The battery pack 10 may be connected to the charging terminal 131 in the state in which the guide block 142 is in contact with the inner damper 140d1. Also, the battery pack 10 may be extracted to the outside of the case 110 in the state in which the guide block 142 is in contact with the outer damper 140d2.

Even if the user strongly pushes the battery pack 10, the inner damper 140d1 may slowly stop the guide block 140 and the movable plate 120 at a predetermined position. Thus, strong collision between the battery pack 10 and the charging terminal 131 may be prevented.

Even if the battery pack 10 is strongly extracted by the elastic member 143 of the guide part 140, the guide block 142 and the movable plate 120 may be slowly stopped at a predetermined position by the outer damper 140d2. Thus, it is possible to prevent the battery pack 10 from accidentally protruding out of the case 110.

The guide part 140 of the battery charging device 100A may further include an electromagnet 145 selectively applying attractive force toward the terminal plate 130 on the guide block 143.

The electromagnet 145 may be disposed on the inner surface of the terminal plate 130 or the case 110, but is not limited thereto. Like the guide rail 141, a plurality of electromagnets 145 may be provided. The plurality of electromagnets 145 may be spaced apart from each other in the width direction of the case 110.

The guide block 142 may include a magnetic material having magnetism and may be configured to interact with magnetic force of the electromagnet 145.

The controller 170 (see FIG. 3) may control the electromagnet 145. For example, the controller 170 may control the electromagnet 145 based on a detected result of the proximity sensor 102.

The controller 170 may activate the electromagnet 145 when the battery pack 10 is inserted to a predetermined position in an accommodation space S. The attractive force applied to the guide block 142 by the activated electromagnet 145 may be greater than the elastic force applied to the guide block 142 by the elastic member 143.

When the activated electromagnet 145 applies attractive force to the guide block 142, the guide block 142, the movable plate 120, and the battery pack 10 may easily move toward the terminal plate 130. In addition, in a state in which the battery pack 10 is connected to the charging terminal 131, the activated electromagnet 145 may fix the guide block 142.

Conversely, when the signal for discharging the battery pack 10 is transmitted, the controller 170 may deactivate the electromagnet 145. In this case, since the force applied to the guide block 142 disappears, the guide block 142, the movable plate 120, and the battery pack 10 may easily move toward the entrance of the accommodation space S by the elastic member 143.

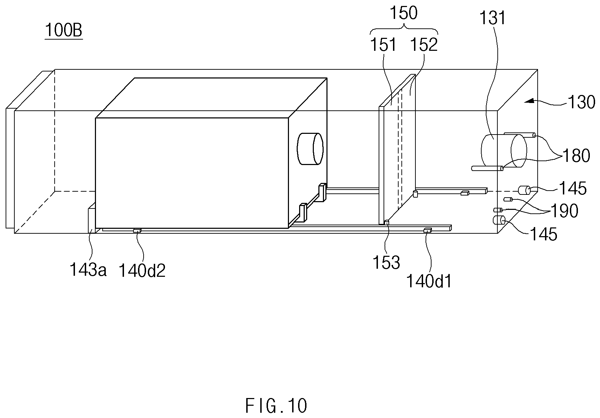

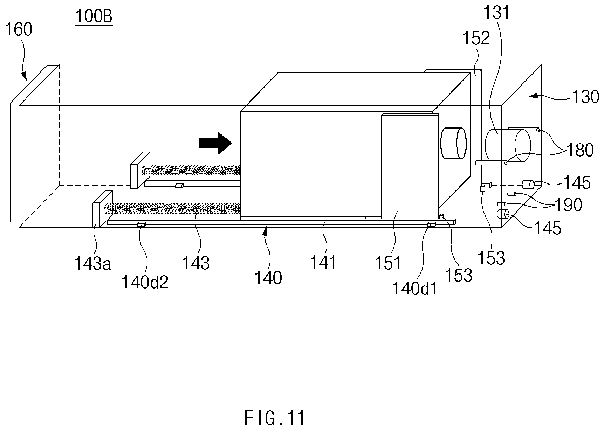

FIGS. 10 and 11 are schematic views of a battery charging device according to a third embodiment of the present invention.

A battery charging device 100B according to a third embodiment of the present invention may include a case 110 having an accommodation space S into which a battery pack 10 is inserted, a terminal plate 130 provided with a charging terminal 131 selectively connected to the battery pack 10 inserted into the accommodation space S, and an opening/closing plate 150 disposed between an entrance of the accommodation space S and the terminal plate 130 and configured to be opened and closed as the battery pack 10 moves.

The battery charging device 100B may further include a driving part 153 that selectively opens and closes the opening/closing plate 150 according to the movement of the battery pack 10.

Hereinafter, except for the opening/closing plate 150 and the driving part 153, the contents described in the first and second embodiments will be cited. Of course, it is also possible that the components described above in the first and second embodiments are further provided in the battery charging device 100B.

FIG. 10 illustrates a state in which the opening/closing plate 150 is closed, and FIG. 11 illustrates a state in which the opening/closing plate 150 is opened.

The opening/closing plate 150 may prevent the battery pack 10 from arbitrarily approaching the charging terminal 131. The battery pack 10 may be connected to the charging terminal 131 when the opening/closing plate 150 is opened. The opening/closing plate 150 may be configured to be closed when the battery pack 10 is extracted from the accommodation space S.

The opening/closing plate 150 may be a double door type. In more detail, the opening/closing plate may include a first plate 151 and a second plate 152, which are arranged in the width direction of the case 110 to rotate in opposite directions. The first plate 151 and the second plate 152 may be disposed to face each other in the width direction of the case 110.

The first plate 151 and the second plate 152 may rotate about a vertical rotation axis (not shown). The rotation axis of the first plate 151 may be disposed adjacent to an inner surface of one side of the case 110, and the rotation axis of the second plate 152 may be disposed adjacent to an inner surface of the other side of the case 110.

In more detail, the first plate 151 may be rotatably hinge-coupled to the inner surface of one side of the case 110, and the second plate 152 may be rotatably hinge-coupled to the inner surface of the other side of the case 110.

When the opening/closing plate 150 is opened, the battery pack 10 may enter between the first plate 151 and the second plate 152.

In a state in which the battery pack 10 is connected to the charging terminal 13, the battery pack 10 may be disposed between the first plate 151 and the second plate 152. In more detail, in the state in which the battery pack 10 is connected to the charging terminal 131, the first plate 151 and the second plate 152 may be configured to support both sides of the battery pack 10.

Thus, the battery pack 10 being charged may be safely protected from an external impact. In addition, the battery pack 10 being charged may be fixed more firmly.

The driving part 153 may selectively open and close the opening/closing plate 150 according to the movement of the battery pack 10. For example, the driving part 153 may include a solenoid switch. The driving part 153 may be provided on each of the first plate 151 and the second plate 152, but is not limited thereto.

The controller 170 (see FIG. 3) may control the driving part 153. For example, the controller 170 may control the driving part 153 based on a detected result of the proximity sensor 102. That is, the driving part 153 may be configured to open and close the opening/closing plate 150 based on the detected result of the proximity sensor 102.

When the battery pack 10 is inserted to a predetermined position within the accommodation space S, the controller 170 may control the driving part 153 to open the opening/closing plate 150. Thus, the battery pack 10 may enter between the first plate 151 and the second plate 152 and be connected to the charging terminal 131.

When the battery pack 10 is detached from a predetermined position in the accommodation space S, the controller 170 may control the driving part 153 to close the opening/closing plate 150. In a state in which the battery pack 10 is extracted from the accommodation space S, the opening/closing plate 150 may be maintained in the closed state.

When the opening/closing plate 150 is closed, foreign substances or the like may be prevented from being introduced into the charging terminal 131. In addition, the opening/closing plate 150 may prevent an unauthorized battery pack 10 from being connected to the charging terminal 131 together with the door unit 160.

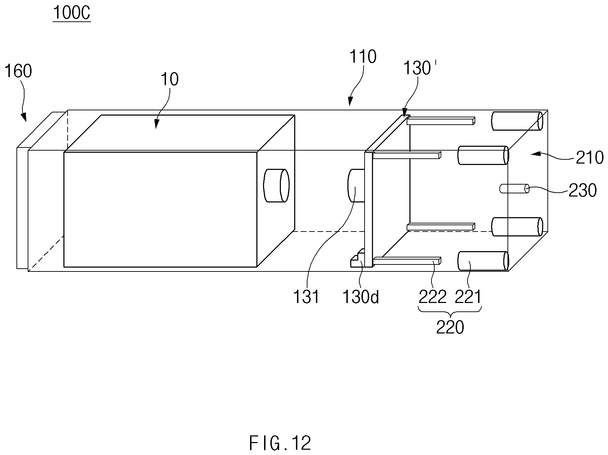

FIG. 12 is a schematic view of a battery charging device according to a fourth embodiment of the present invention.

A battery charging device 100C according to a fourth embodiment of the present invention may include a case 110 having an accommodation space S into which a battery pack 10 is inserted, a terminal plate 130' provided with a charging terminal 131 electrically connected to the battery pack 10 inserted into the accommodation space S and moving in a longitudinal direction of the case 110, a fixing plate 210 facing the terminal plate 130' and disposed at an opposite side of an entrance of the accommodation space S with respect to the terminal plate 130', and a buffer part 220 disposed between the terminal plate 130' and the fixing plate 210 to buffer and support the terminal plate 130'.

Hereinafter, descriptions duplicated with those described in the first to third embodiments are cited. In addition, even if the components described in the above first to third embodiments are not illustrated in FIG. 12, it is possible to further include the components in the battery charging device 100C.

The fixing plate 210 may be fixed to the case 110. For example, the entrance of the accommodation space S may be defined in one end of the case 110, and the fixing plate 210 may be disposed at the other end. The accommodation space S may be defined by an inner surface of the case 110 and an inner surface of the fixing plate 210.

The terminal plate 130' may be configured to move in a longitudinal direction of the case 110 without being fixed to the case 110. The terminal plate 130' may be disposed in the accommodation space S. The terminal plate 130' may move in the longitudinal direction of the case 110 within the accommodation space S.

One surface of the terminal plate 130' may face the entrance of the accommodation space S, and the other surface may face the fixing plate 210. The charging terminal 131 may be provided on the one surface of the terminal plate 130'.

When the user inserts the battery pack 10 into the accommodation space S, the terminal plate 130' may move toward the fixing plate 210 together with the battery pack 10 by force pushing the battery pack 10.

A damper 130d configured to buffer an impact applied by the battery pack 10 when the battery pack 10 is inserted may be provided on one side of both sides of the terminal plate 130' facing the entrance of the accommodation space S.

For example, the battery pack 10 may move alone until the battery pack 10 collides with the damper 130d, and after the battery pack 10 collides with the damper 120d, the battery pack 10 and the terminal plate 130' may move together.

Even if the user strongly pushes the battery pack 10 by the damper 130d, an impact applied by the battery pack 10 to the terminal plate 130' may be buffered.

The buffer part 220 may be disposed between the terminal plate 130 and the fixing plate 210. The buffer part 220 may buffer and support the terminal plate 130 with respect to the fixing plate 210.

In more detail, the buffer part 220 may include a shock absorber 221 provided on the fixed plate 210 and a support 222 provided on the terminal plate. The support 222 may be in contact with or be connected to the shock absorber 221 when the terminal plate 130' approaches the fixed plate 210.

When the shock absorber 221 is in contact with or is connected to the support 222, the shock absorber 221 may be configured to be compressed to absorb the impact. For example, the shock absorber 221 may be a hydraulic or pneumatic compression shock absorber. Since the configuration of the shock absorber 221 is a well-known technology, a detailed description thereof will be omitted.

The support 222 may extend parallel to the longitudinal direction of the case 10. The support 222 may have a substantially bar shape.

The support 222 may support the terminal plate 130' relative to the case 110. In more detail, the support 222 may be in contact with an inner surface of the case 110 and support the terminal plate 130' to move in a state of being maintained in a vertically erected state without collapsing.

The support 222 may be provided on the other side, which faces the fixing plate 21, of both sides of the terminal plate 130'.

The support 222 may be provided at a corner part of the terminal plate 130'. That is, four supports 222 may be provided. Thus, the case 110 may be stably supported. Thus, the shock absorbers 221 may be provided at four corner parts of the fixing plate 210. However, it will also be possible to provide more or less than four supports 222 and shock absorbers 221.

Although not shown in FIG. 12, the previously described pack fixing part 180 (see FIG. 9) may be provided on the terminal plate 130'.

The battery charging device 100C may further include a terminal plate fixing part 230 that selectively fixes the terminal plate 130' in the longitudinal direction of the case 110.

The terminal plate fixing part 230 may be provided on the case 110 or the fixing plate 210.

The terminal plate fixing part 230 may fix the terminal plate 130' in a state in which the shock absorber 221 and the support 222 are connected to each other or are in contact with each other.

The configuration of the terminal plate fixing part 230 is not limited. For example, the terminal plate fixing part 230 may include a latch and a latch driving part (e.g., motor) the drives the latch, similar to the plate fixing part 190. In this case, the terminal plate 130' may be provided with a locking groove in which the latch is hooked. However, it is not limited thereto, and those skilled in the art may implement the terminal plate fixing part 230 in various manners.

The controller 170 may control the terminal plate fixing part 230 so that the terminal plate 130' is fixed or released. For example, the controller 170 may control the plate fixing part 230 based on a detected result of the proximity sensor 102.

When the battery pack 10 or the terminal plate 130' reaches a predetermined position, the controller 170 may control the terminal plate fixing part 230 to fix the terminal plate 130'. When a signal for discharging the battery pack 10 is transmitted, the controller 170 may control the terminal plate fixing part 230 to disengage the terminal plate 130'.

In order to easily discharge the battery pack 10, the buffer part 220 may be configured to apply restoring force toward the entrance of the accommodation space S to the terminal plate 130'. For example, the shock absorber 221 may be configured to not only buffer an impact, but also push the support 222 backward after being compressed.

Therefore, when the terminal plate fixing part 230 releases the fixing of the terminal plate 130', the terminal plate 130' and the battery pack 10 may move toward the entrance of the accommodation space S by the restoring force. As a result, the battery pack 10 may be easily extracted.

However, the configuration for easy discharge of the battery pack 10 is not limited thereto. For example, an elastic part separated from the buffer part 220 may be provided, or a pusher driven to push the terminal plate 130' may be provided between the terminal plate 130' and the fixing plate 210.

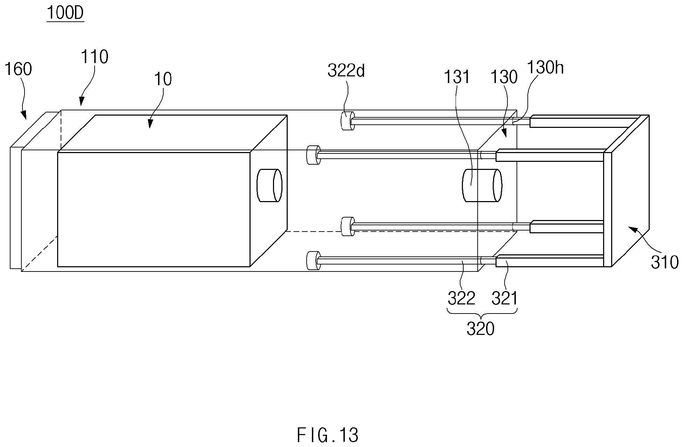

FIG. 13 is a schematic view of a battery charging device according to a fifth embodiment of the present invention.

A battery charging device 100D according to a fifth embodiment of the present invention may include a case 110 having an accommodation space S into which a battery pack 10 is inserted, a terminal plate 130 provided with a charging terminal 131 electrically connected to the battery pack 10 inserted into the accommodation space S, a fixing plate 310 facing the terminal plate 130 and disposed at an opposite side of an entrance of the accommodation space S with respect to the terminal plate 130, and a buffer part 320 disposed to protrude the inside of the terminal plate 130 from the fixing plate 310 so as to buffer and support the battery pack 10.

Hereinafter, descriptions duplicated with those described in the first to third embodiments are cited. In addition, even if the components described in the above first to third embodiments are not illustrated in FIG. 13, it is possible to further include the components in the battery charging device 100D.

The fixing plate 310 may be disposed outside the case 110. The fixing plate 310 may be fixed to the case 110 or to another structure outside the case 110. In this case, the fixing plate 310 may face the terminal plate 130 provided at an end of the case 110.

However, it is not limited thereto, and it may be possible that the fixing plate 310 is provided on the end of the case 110. In this case, the terminal plate 130 may be fixed inside the case 110.

The buffer part 320 may protrude from the fixing plate 310 toward the inside of the terminal plate 130. The buffer part 320 may protrude from the fixing plate 310 through the terminal plate 130 into the accommodation space S.

In more detail, the buffer part 320 may include a shock absorber 321 provided on the fixed plate 310 and a support 322 protruding from the shock absorber 321 to the inside of the terminal plate 130.

The shock absorber 321 may be provided on one surface, which faces the terminal plate 130, of both surfaces of the fixing plate 310.

The shock absorber 321 may be compressed to absorb an impact when the battery pack 10 collides with the support 322. For example, the shock absorber 321 may be a hydraulic or pneumatic compression shock absorber. Since the configuration of the shock absorber 321 is a well-known technology, a detailed description thereof will be omitted.

The support 322 may support the battery pack 10 in a longitudinal direction of the case 110. The support 322 may extend parallel to the longitudinal direction of the case 10. The support 322 may have a substantially bar shape.

The support 322 may be connected to the shock absorber 321. In more detail, one end of the support 322 may be connected to the shock absorber 321. A damper 322d to be described later may be provided on the other end of the support 322.

A length of the support 322 protruding from the shock absorber 321 may be variable. For example, when the shock absorber 321 is compressed, the length of the support 322 protruding from the shock absorber 321 may be reduced.

The support 322 may protrude into the accommodation space S by passing through the terminal plate 130. In more detail, a through-hole 130h through which the support 322 passes may be defined in the terminal plate 130.

The damper 322d configured to buffer an impact applied by the battery pack 10 when the battery pack 10 is inserted may be provided on an end of the support 322.

Even if the user strongly pushes the battery pack 10 by the damper 322d, the impact applied by the battery pack 10 to the support 322 may be buffered.

The support 322 may protrude inward by passing through four corner parts of the terminal plate 130. That is, four supports 322 may be provided, and the through-hole 130h through which each support 322 passes may be defined in the four corner parts of the terminal plate 130. Thus, the shock absorbers 321 may be provided at four corner parts of the fixing plate 310. However, it will also be possible to provide more or less than four supports 322 and shock absorbers 321.

Thus, the battery pack 10 may be stably supported, and the support 322 may be prevented from interfering with the charging terminal 131.

Although not illustrated in FIG. 13, the previously described pack fixing part 180 (see FIG. 9) may be provided on the terminal plate 130.

In order to easily discharge the battery pack 10, the buffer part 320 may be configured to apply restoring force toward the entrance of the accommodation space S to the battery pack 10. For example, the shock absorber 321 may be configured to not only buffer an impact, but also push the support 322 backward after being compressed.

Thus, when the fixing of the battery pack 10 is released by the pack fixing part 180, the battery pack 10 may move toward the entrance of the accommodation space S by the elastic force. As a result, the battery pack 10 may be easily extracted.

The above-disclosed subject matter is to be considered illustrative, and not restrictive, and the appended claims are intended to cover all such modifications, enhancements, and other embodiments, which fall within the true spirit and scope of the present invention.

Thus, the embodiment of the present invention is to be considered illustrative, and not restrictive, and the technical spirit of the present invention is not limited to the foregoing embodiment.

Therefore, the scope of the present invention is defined not by the detailed description of the invention but by the appended claims, and all differences within the scope will be construed as being included in the present invention.

**[Description of the Symbols]**

| | | | |
|---|---|---|---|
| 10: | Battery pack | 100: | Battery charging device |
| 101: | Door sensor | 102: | Proximity sensor |
| 110: | Case | 120: | Movable plate |
| 130: | Terminal plate | 131: | Charging terminal |
| 140: | Guide part | 141: | Guide rail |
| 142: | Guide block | 143: | Elastic member |
| 145: | Electromagnet | 150: | Opening/closing plate |
| 160: | Door unit | 161: | Door frame |
| 162: | Door plate | 163: | Elastic hinge |
| 164: | Communication part | 165: | Door lock |
| 166: | Locking device | 166a: | Locking part |
| 167: | Locking groove | 170: | Controller |
| 180: | Pack fixing part | 181: | Hook |
| 182: | Hook driving part | 190: | Plate fixing part |
| 191: | Latch | 192: | Latch driving part |
| 210, 310: | Fixed plate | | |
| 220, 320: | Buffer part | | |
| 221, 321: | Shock absorber | | |
| 222, 322: | Support | | |

## Claims

1. A battery charging device comprising:
a case having an accommodation space into which a battery pack is inserted;
a terminal plate comprising a charging terminal selectively connected to the battery pack inserted into the accommodation space; and
an opening/closing plate disposed at an entrance of the accommodation space and the terminal plate so as to be opened and closed according to a movement of the battery pack.

2. The battery charging device of claim 1, further comprising a movable plate on which the battery pack is seated and which moves in a longitudinal direction of the case within the accommodation space.

3. The battery charging device of claim 2, further comprising a plate fixing part configured to fix the movable plate when the battery pack and the charging terminal are connected to each other.

4. The battery charging device of claim 2, wherein the movable plate is provided with a damper configured to buffer an impact applied when the battery pack is inserted.

5. The battery charging device of claim 2, further comprising a guide part disposed in the accommodation space to guide the movable plate so that the movable plate moves in the longitudinal direction of the case.

6. The battery charging device of claim 5, wherein the guide part comprises:
a guide rail disposed on an inner surface of the case and extending in a direction parallel to the longitudinal direction of the case; and
a guide block which is slidably coupled to the guide rail and to which the movable plate is connected.

7. The battery charging device of claim 6, wherein the guide rail is provided with a damper configured to buffer an impact applied by the guide block when the battery pack is inserted or extracted.

8. The battery charging device of claim 6, wherein the guide part further comprises an electromagnet configured to selectively apply an attractive force to the guide block toward the terminal plate.

9. The battery charging device of claim 6, wherein the guide part further comprises an elastic member configured to apply an elastic force toward the entrance of the accommodation space on the guide block.

10. The battery charging device of claim 9, wherein the elastic member comprises a spring configured pull the guide block toward the entrance of the accommodation space.

11. The battery charging device of claim 1, further comprising a pack fixing part provided on the terminal plate and configured to fix the battery pack when the battery pack and the charging terminal are connected to each other.

12. The battery charging device of claim 1, wherein the battery pack is connected to the charging terminal in a state in which the opening/closing plate is opened.

13. The battery charging device of claim 1, wherein the opening/closing plate is configured to be closed when the battery pack is extracted from the accommodation space.

14. The battery charging device of claim 1, further comprising a driving part configured to selectively open and close the opening/closing plate as the battery pack moves.

15. The battery charging device of claim 14, further comprising a proximity sensor configured to sense whether the battery pack reaches a preset position.

16. The battery charging device of claim 15, wherein the driving part is configured to open and close the opening/closing plate based on a sensed result of the proximity sensor.

17. The battery charging device of claim 1, wherein the opening/closing plate comprises a first plate and a second plate, which are arranged in a width direction of the case to rotate in directions opposite to each other.

18. The battery charging device of claim 17, wherein the first plate is rotatably hinge-coupled to an inner surface of one side of the case, and the second plate is rotatably hinge-coupled to an inner surface of another side of the case.

19. The battery charging device of claim 17, wherein, when the opening/closing plate is opened, the battery pack is introduced between the first plate and the second plate.

20. The battery charging device of claim 17, wherein, in a state in which the battery pack is connected to the charging terminal, the battery pack is disposed between the first plate and the second plate.

21. The battery charging device of claim 17, wherein, in a state in which the battery pack is connected to the charging terminal, the first plate and the second plate are configured to support opposite side surfaces of the battery pack.

22. A battery charging device comprising:
a case having an accommodation space into which a battery pack is inserted;
a movable plate on which the battery pack is seated and which moves in a longitudinal direction of the case within the accommodation space;
a terminal plate comprising a charging terminal selectively connected to the battery pack inserted into the accommodation space; and
a guide part disposed in the accommodation space to guide the movable plate so that the movable plate moves in the longitudinal direction of the case.

23. The battery charging device of claim 22, wherein a damper is provided on the movable plate and is configured to buffer an impact applied by the battery pack when the battery pack is inserted.

24. The battery charging device of claim 22, wherein the guide part comprises:
a guide rail disposed on an inner surface of the case and extending in a direction parallel to the longitudinal direction of the case; and
a guide block which is slidably coupled to the guide rail and to which the movable plate is connected.

25. The battery charging device of claim 24, wherein the guide rail is provided with a damper configured to buffer an impact applied by the guide block when the battery pack is inserted or extracted.

26. The battery charging device of claim 24, wherein the guide part further comprises an electromagnet configured to selectively apply an attractive force to the guide block toward the terminal plate.

27. The battery charging device of claim 24, wherein the guide part further comprises an elastic member configured to apply an elastic force toward the entrance of the accommodation space on the guide block.

28. The battery charging device of claim 27, wherein the elastic member comprises a spring configured pull the guide block toward the entrance of the accommodation space.

29. The battery charging device of claim 22, further comprising a plate fixing part configured to fix the movable plate when the battery pack and the charging terminal are connected to each other.

30. The battery charging device of claim 29, wherein the plate fixing part comprises:
a latch configured to be connected to the movable plate; and
a latch driving part configured to drive the latch so that the latch fixes the movable plate or releases a fixed state of the movable plate.

31. The battery charging device of claim 22, further comprising a pack fixing part provided on the terminal plate and configured to fix the battery pack when the battery pack and the charging terminal are connected to each other.

32. The battery charging device of claim 31, wherein the pack fixing part comprises:
a hook configured to be connected to the battery pack; and
a hook driving part configured to drive the hook so that the hook fixes the battery pack or releases a fixed state of the battery pack.

33. The battery charging device of claim 32, wherein an opening through which the hook protrudes is defined in the terminal plate, and
wherein the hook passes through the opening so as to be selectively connected to the battery pack.

34. The battery charging device of claim 32, wherein the hook is provided in a pair at opposite sides of the charging terminal.

35. The battery charging device of claim 22, further comprising a door unit configured to selectively open and close an entrance of the accommodation space.

36. The battery charging device of claim 35, wherein the door unit comprises:
a door frame provided on an end of one side of the case and configured to define an entrance of the accommodation space; and
a door plate rotatably hinge-coupled to the door frame and configured to selectively open and close the entrance of the accommodation space.

37. The battery charging device of claim 36, wherein the guide part comprises:
a guide rail disposed on an inner surface of the case and extending in a direction parallel to the longitudinal direction of the case;
a guide block which is slidably coupled to the guide rail and to which the movable plate is connected; and
an elastic member configured to apply an elastic force to the entrance of the accommodation space on the guide block.

38. The battery charging device of claim 37, wherein a first spring holder to which one end of the elastic member is connected is provided on the case or the door frame, and
a second spring holder to which another end of the elastic member is connected is provided on the guide block.

39. The battery charging device of claim 36, wherein a door lock configured to selectively lock the door plate to the door frame is provided on the door unit.

40. The battery charging device of claim 39, wherein the door lock comprises:
a locking groove defined in the door frame; and
a locking device provided on the door plate to selectively insert a locking part to the locking groove.

41. The battery charging device of claim 39, wherein the door unit is provided with a communication part configured to wirelessly communicate with an external device or the battery pack, and
wherein the door lock is selectively locked or unlocked according to a signal input through the communication part.

42. The battery charging device of claim 36, wherein the door plate is connected to the door frame through an elastic hinge, and
wherein the elastic hinge is configured to apply an elastic force to the door plate so that the door plate closes the entrance of the accommodation space.

43. The battery charging device of claim 36, wherein, when the battery pack is inserted into the accommodation space, the door plate that is opened is disposed between the battery pack and an inner surface of the case.

44. A battery charging device comprising:
a case having an accommodation space into which a battery pack is inserted;
a terminal plate provided with a charging terminal selectively connected to the battery pack inserted into the accommodation space and moving in a longitudinal direction of the case;
a fixed plate facing the terminal plate and disposed at an opposite side of an entrance of the accommodation space with respect to the terminal plate; and
a buffer part disposed between the terminal plate and the fixed plate to support the terminal plate to be buffered.

45. The battery charging device of claim 44, further comprising a damper configured to buffer an impact applied by the battery pack when the battery pack is inserted, and the damper is provided on one surface of opposite surfaces of the terminal plate, which faces the battery pack.

46. The battery charging device of claim 44, wherein the buffer part comprises:
a shock absorber provided on the fixed plate; and
a support which is provided on the terminal plate and is in contact with or supported by the shock absorber when the terminal plate approaches the fixed plate.

47. The battery charging device of claim 46, wherein the support is configured to support the terminal plate with respect to the case.

48. The battery charging device of claim 46, wherein the support is provided at each of four corner parts of the terminal plate.

49. The battery charging device of claim 44, wherein the buffer part is configured to apply an elastic force toward the entrance of the accommodation space on the terminal plate.

50. The battery charging device of claim 44, further comprising a pack fixing part provided on the terminal plate and configured to fix the battery pack when the battery pack and the charging terminal are connected to each other.

51. The battery charging device of claim 44, further comprising a terminal plate restriction part configured to selectively restrict the terminal plate in the longitudinal direction of the case.

52. A battery charging device comprising:
a case having an accommodation space into which a battery pack is inserted;
a terminal plate provided with a charging terminal selectively connected to the battery pack inserted into the accommodation space;
a fixed plate facing the terminal plate and disposed at an opposite side of an entrance of the accommodation space with respect to the terminal plate; and
a buffer part protruding from the fixed plate to an inside of the terminal plate to support the battery pack to be buffered.

53. The battery charging device of claim 52, wherein the buffer part comprises:
a shock absorber provided on the fixed plate; and
a support extending to protrude from the shock absorber to the inside of the terminal plate.

54. The battery charging device of claim 53, wherein a damper configured to buffer an impact applied by the battery pack when the battery pack is inserted is provided on an end of the support.

55. The movable robot according to claim 53, wherein a through-hole through which the support passes is defined in the terminal plate.

56. The battery charging device of claim 53, wherein the support passes through four corner parts of the terminal plate to protrude inward.

57. The battery charging device of claim 52, wherein the buffer part is configured to apply a restoring force toward the entrance of the accommodation space on the battery pack.

58. The battery charging device of claim 52, further comprising a pack fixing part provided on the terminal plate and configured to fix the battery pack when the battery pack and the charging terminal are connected to each other.
